(19) Europäisches Patentamt
European Patent Office
Office européen des brevets

(11) **EP 2 012 104 A2**

(12) **EUROPEAN PATENT APPLICATION**

(43) Date of publication:
**07.01.2009 Bulletin 2009/02**

(51) Int Cl.:
***G01L 5/00*** *(2006.01)*     ***B41F 33/00*** *(2006.01)*

(21) Application number: **08166669.5**

(22) Date of filing: **24.09.2002**

(84) Designated Contracting States:
**AT BE BG CH CY CZ DE DK EE ES FI FR GB GR IE IT LI LU MC NL PT SE SK TR**

(30) Priority: **24.09.2001 SE 0103156**

(62) Document number(s) of the earlier application(s) in accordance with Art. 76 EPC:
**02799536.4 / 1 430 284**

(71) Applicant: **RNG I Lund AB**
**224 56 Lund (SE)**

(72) Inventor: **Cronvall, Leif**
**227 30, KIVIK (SE)**

(74) Representative: **Karlsson, Leif Gunnar Börje**
**Ström & Gulliksson AB**
**P.O. Box 4188**
**203 13 Malmö (SE)**

Remarks:
This application was filed on 15-10-2008 as a divisional application to the application mentioned under INID code 62.

(54) **Roller nip gauge**

(57)     The present invention refers to a method for dynamic measurement of a nip between two units (5, 6, 7, 10, 12). The invention also refers to a Roller Nip Gauge. Said units may be rollers (10, 12), cylinders (5, 6, 7) or a surface having a non-circular cross section. The length (n) and pressure of the nip is measured by clocking the length of time at least two pressure sensitive elements (3, 4, 27, 28) are passing within the nip. In some embodiment also a temperature sensor (26) is provided. The Roller Nip Gauge comprises a housing (1, 14) and a tongue (2, 15) extending from the housing (1, 14). Two pressure sensitive elements (3, 4; 27, 28) are arranged at a distance (L) from each other at the outer end of the tongue (2, 15).

Fig. 1

**Description**

Technical Field

The present invention concerns a Roller Nip Gauge (RNG) and more specifically a method and means to gauge the length or width of the nip between two rollers or cylinders or between one roller or cylinder and a surface having another cross section form. The Roller Nip Gauge may also be used to measure different conditions in the nip such as the contact pressure and the temperature. The invention is developed for printing machines, especially offset and sheet fed printing machines. However, a person skilled in the art realises that it may be used in any application where it would be beneficial to measure on a nip between rollers or the like. Such other applications may be in paper making, copying machines, labelling machines, laminating and packaging machines etc.

The expressions "nip length" and "nip width" are often used interchangeable. In the present description we will use the term "nip length", by which is meant the length of the nip in the rotational direction of the rollers or the like. When the term "width" is used herein it refers to the axial extension of the rollers. For convenience the expression "unit" is often used in the description below for the parts in contact forming the nip. Said "units" may thus be rollers, cylinders or parts having a non-circular cross section. For printing presses the expression "rollers" are used for units having a relatively small diameter, such as form rollers. The expression "cylinders" are used for units having a relatively large diameter, such as plate, blanket and impression cylinders.

By monitoring the nip length and pressure of the contact area between two units of a printing press it is possible to control the spread and thickness of ink or fountain solution delivered by the different units. The pressure at the nip and the elasticity of the units of the nip dictate the nip length. By the control of both nip length and pressure it is possible to optimise the quality of the printing. It is also possible to control the condition of the units, e.g. if the elasticity of one unit has become too low indicating a need for replacement. Also the temperature at the nip may give vital information regarding the state of separate units.

Prior Art

Many different kinds of Roller Nip Gauges are previously known. Many of these function in a static way, i.e. they measure on units that are not moving during the measuring sequence. The previously known gauges often use some kind of elements by which the electrical resistance is changed if the elements are compressed. It is also previously known to use a number of closely spaced elements and to check the number of elements depressed by the units. One drawback of the previous gauges is that they have a substantial thickness. This means that they cannot be used for measurement on nips having small dimensions. Furthermore, they have rather poor resolution and the impact of bending may influence the measured values.

The available space to put a Roller Nip Gauge in position for measuring is often very restricted, thus there is a need for a Roller Nip Gauge that is as small as is practically conceivable, having a flexible and thin element.

The Invention

The Roller Nip Gauge of the present invention is developed for a dynamic measurement, i.e. the measuring is done on moving rollers or the like. A dynamic measurement gives a better resolution compared to a static measurement and more accurately reflects the conditions that appear during printing.

One object of the present invention is to be able to measure on units having rather small dimensions. A further object of the present invention is to improve the resolution compared to the prior art gauges. Still a further object is to measure the contact pressure in the nip.

The above objects are met by a method for dynamic measurement of the nip between two units, i.e. two rollers/cylinders or one roller/cylinder and a surface having a non-circular cross section. The length of the nip is measured by clocking the length of time at least two pressure sensitive elements are passing within the nip.

These objects are also met by a Roller Nip Gauge comprising a housing and a tongue extending from one end of the housing. Two pressure sensors are arranged at the outer end of the tongue, at a known distance from each other in the expected direction of motion for the tongue.

By the present invention various time lengths are clocked and used to determine the nip length. This is on the condition that the speed of the press is constant. In practice this is almost always the case during the short time period of measurement.

In an alternative embodiment the Roller Nip Gauge is further furnished with a temperature sensor and/or a separate pressure sensor, making it possible to monitor further conditions of the nip.

The Roller Nip Gauge of the present invention may be used both as an indicator and as an analyser. As used here the expressions "indicator" and "analyser" should be interpreted in the following way. An indicator merely displays the different measurements. An analyser, in addition to displaying results of measurements, also evaluates the results. Thus, it may compare the latest measurements with previous measurements at the same point, indicate and propose changed settings of the machine, indicate the need for replacement of parts of the machine etc.

Other objects and advantages of the present invention will be obvious for a person skilled in the art when reading the detailed description below of preferred embodiments.

Brief Description of the Drawings

The present invention will be described more closely below, with reference to the enclosed drawings. In the drawings:

    Fig. 1 is a plan view of a first example of a Roller Nip Gauge according to the present invention;
    Fig. 2 is a schematic view of a part of an offset printing machine;
    Fig. 3 is a schematic view illustrating a nip between two units;
    Fig. 4 is a number of diagrams illustrating the principle of the measuring method according to the present invention;
    Fig. 5 is an enlarged view of an alternative design of a detail of the Roller Nip Gauge according to the pres??ent invention;
    Fig. 6 is a plan view, partly cut out of a further example of a Roller Nip Gauge according to the present invention; and
    Fig. 7 is an enlarged view of an alternative embodiment of a detail of the Roller Nip Gauge of the present invention.

Detailed Description of Preferred Embodiments

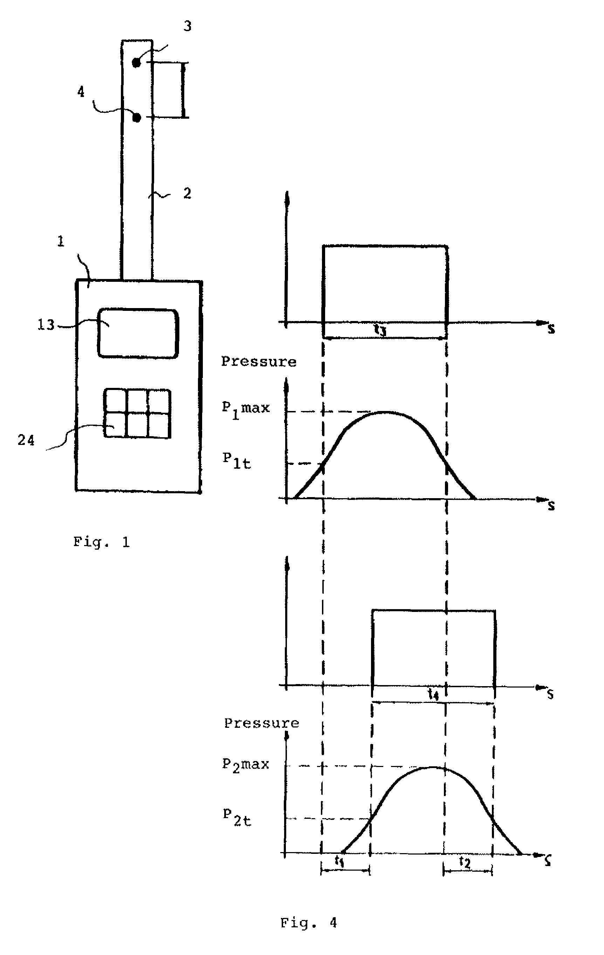

The Roller Nip Gauge of the present invention may be designed in many different ways, depending on the intended use. To explain the principals one example of a simple design is shown in Fig. 1. The shown Roller Nip Gauge comprises a housing 1 and a tongue 2 projecting from one end of the housing 1. Two pressure sensitive elements 3, 4 are placed near the outer, free end of the tongue 2. Furthermore, the housing 1 has normally some kind of display 13, a number of buttons 24 adjacent the display 13 for control of the measuring cycles and means for communication with a peripheral unit.

The pressure sensitive points or elements are pressure sensors 3, 4 in the embodiment of Fig. 1. These sensors 3, 4 will give a signal depending on the amount of pressure exerted on them. In that two sensors 3, 4 are used the feeding speed of the rollers may be calculated. The tongue 2 is made relatively thin having a thickness of about 0.1 to 0.5 mm. Methods for manufacturing sensor elements are available on the market.

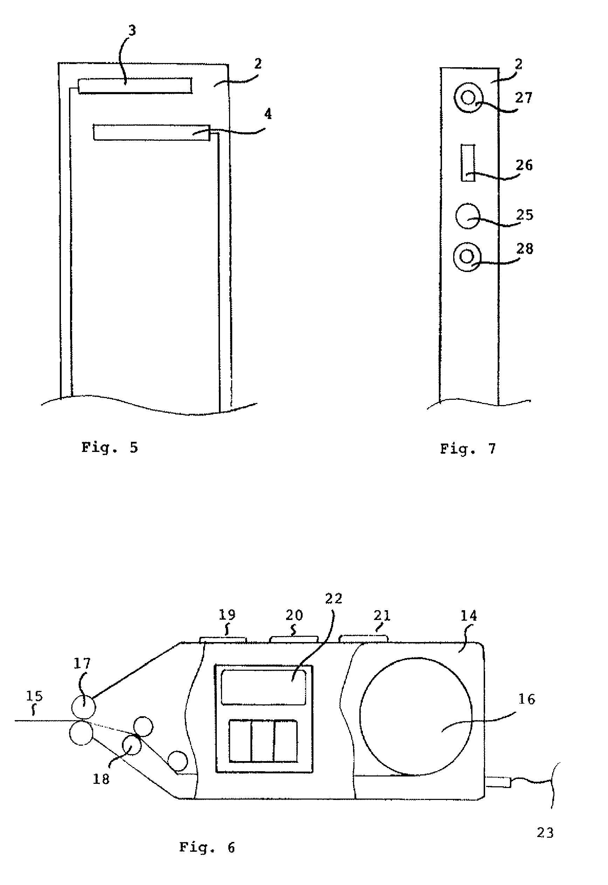

In an alternative the pressure sensitive elements are mechanical switches 27, 28, indicated in Fig. 7. The mechanical switches 27, 28 will switch when exerted to a pressure above a pre-set value. A person skilled in the art realises that any element responding to a pressure may be used as pressure sensitive element in this invention, it is also possible to combine two different types of pressure sensitive elements. Thus, it is possible to have one mechanical switch and one pressure sensor.

In order not to harm the sensors 3, 4, mechanical switches 27, 28 or other pressure sensitive element of the tongue 2, at least one of the units for which the nip is measured should be compressible, or there should be a certain free space between the units. It should also be noted as stated above that it is possible to measure the nip between a roller or cylinder and a plan surface. Also in this case either the roller (cylinder) or the plan surface should be compressible, or there should be a certain free space.

The Roller Nip Gauge of the present invention could also be used as a gauge for the distance or gap between two units, in which case it is not necessary that one unit is compressible. In the simplest version the thickness of the tongue is made to correspond with the desired gap. It is also possible to have a relatively thin tongue as basic element to which extra material is added to give a thickness corresponding to the desired gap.

The pressure sensors 3, 4 or other pressure sensitive element at the end of the tongue are placed at a distance L from each other in the intend direction of motion. When the Roller Nip Gauge is to be used the tongue 2 is feed in between two units. When the pressure sensors 3, 4 have travelled across the nip the tongue is normally retracted. This can be done in many ways e.g. the units may be separated allowing for the tongue 2 to be withdrawn, sometimes it is possible to withdraw the tongue against the rotational direction of the units, in some instances the rotating direction may be reversed. As a precaution the tongue 2 is normally attached to the housing 1 in such a way that it will be disconnected should the housing 1 go against the units. Normally some kind of security unit (not shown) is placed at the end of the housing 1, which security unit will go against the units. The tongue 2 is that small that it will not harm the press and often the tongue 2 may be retrieved. Tongues of different dimensions may be used adapted to the dimensions of the nip to be controlled. Thus, by having a range of different tongues it is possible to monitor many different machines using the same housing 1.

As the available space often is limited the housing 1 should be made as small as practically possible.

The sensors 3, 4 are shown having the form of circular points, but a person skilled in the art realises that the sensors may be given any form. The ideal form of the sensors 3, 4 will vary depending on the actual situation. Preferably the extension in the direction of motion of the sensors 3, 4 should be less than the expected length of a pressure line formed between the units. If the sensing areas of the pressure sensors 3, 4 exceeds the width of the pressure line the measurements may be more cumbersome to interpret. For a more exact measurement virtually all of the sensing area of each sensor should be effected at once. This will give a static measuring compared to a dynamic measuring if only parts of the sensor is affected during "extended" periods of time. Thus, to achieve this it is possible to give the sensors 3, 4 an elongate form having a small extension in the direction of motion but a larger extension perpendicular to the direction of motion, as indicated in Fig. 5. It is also possible to let the sensors have a triangular, rectangular, square or other suitable form. The exact form chosen may depend on the intended use of the Roller Nip Gauge.

In a further alternative embodiment (Fig. 7) a separate pressure sensor 25 and a temperature sensor 26 are placed at the end of the tongue 2. In the shown embodiment the separate pressure sensor 25 and temperature sensor 26 are placed between two mechanical switches 27, 28. However, as stated above, any type of pressure sensitive elements may be used in stead of the mechanical switches 27, 28. By placing the separate pressure sensor 25 and the temperature sensor 26 between the pressure sensitive elements it is possible to guarantee that measurements are made when the sensors 25, 26 are within the nip. Due to the dimensions of the nip and sensors, the best position for temperature measurements etc. the separate pressure sensor 25 and/or temperature sensor 26 are not always placed between the pressure sensitive elements. The temperature sensor 26 must often be relatively long to be able to give an accurate measurement at high speeds of rollers or the like. Furthermore, the position of the temperature sensor 26 may be adapted to the parts to be measured which further influences the position. In some embodiments the temperature sensor is an integrated part of the tongue 2. The separate pressure sensor 25 is needed if mechanical switches 27, 28 are used and a measurement of the pressure is wanted. The separate pressure sensor 25 may also have a different sensitivity compared with the pressure sensors 3, 4 used as the pressure sensitive elements.

The housing 1 includes control and calculations means in the form of suitable electronics. The electronics are only standard elements and thus, it will not be described further here.

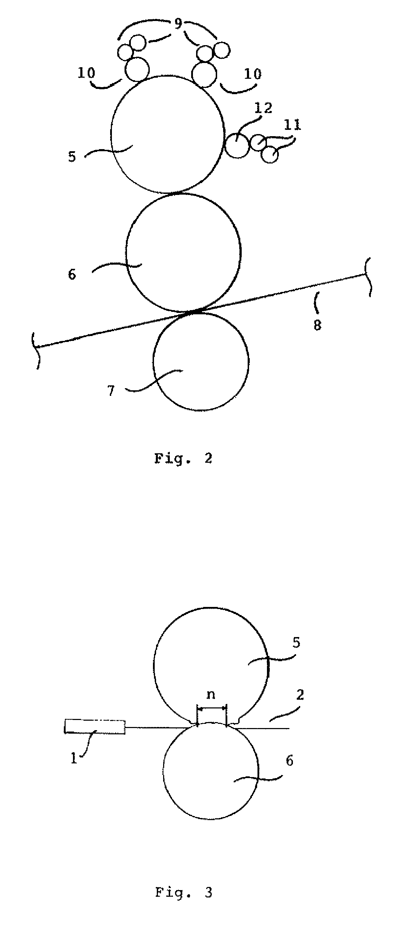

In e.g. printing presses there are several locations where it may be of interest to know the contact profile of a nip. The contact profile normally includes the length n of a nip, the temperature at the nip and/or the contact pressure of the nip. The length n, temperature and pressure of a nip often influence the final quality of the print. It may also effect the amount of printing ink or fountain solution taken up. In Fig. 2 some parts of a printing press that are of interest for the present invention are shown. The printing press comprises a plate cylinder 5, having a number of printing plates. In contact with the plate cylinder 5 and rotating almost in synchronism therewith is a blanket cylinder 6, which in turn is in contact with a medium to be printed, normally a paper web 8. On the other side of the paper web 8 and co-operating with the blanket cylinder 6 there is an impression cylinder 7. Furthermore, the printing press comprises one or more ink rollers 10 taking up ink by means of one or more intermediate rollers 9 and a damping (fountain) roller 12 taking up fountain solution by means of intermediate rollers 11. The ink rollers 10 and damping roller 12 are often referred to as form rollers.

The nips between the blanket cylinder 6 and the impression cylinder 7, between the plate cylinder 5 and the blanket cylinder 6, between the plate cylinder 5 and the one or more ink rollers 10, and between the plate cylinder 5 and the damping roller 12 may all be of interest.

Fig. 3 shows one example of a nip between two units, in this case a plate cylinder 5 and a blanket cylinder 6. In Fig. 3 the housing 1 of a Roller Nip Gauge is shown. The tongue 2 of the Roller Nip Gauge is shown positioned in the nip. The nip between two units may be defined as the part in which the units are in contact. The form of the compressible unit may be affected outside the area of the actual nip. The expression "pressure line" of the nip as used in this description refers to the area of the nip where the pressure exerted between the units exceeds a threshold value. The actual length of the area in which a compressible unit is effected is normally larger than the "pressure line". The expression "pressure zone" is often used for the total effected length of the nip. Thus, by amending the threshold values it is possible to control the "pressure line" of an optional nip.

The method for measurement in using the Roller Nip Gauge of the present invention is indicated in the diagrams of Fig. 4. The upper two diagrams of Fig. 4 relate to the first sensor 3, i.e. the sensor 3 closest to the free end of the tongue 2. The two lower diagrams of Fig. 4 relate to the second sensor 4. The uppermost diagram and the second diagram from below, show the lengths of time that respective sensor 3, 4 are in the nip as defined by the threshold values. The other two diagrams of Fig. 4 show the pressure experienced by respective sensor 3, 4, during a measurement cycle.

When the pressure sensed by respective pressure sensor 3, 4 exceeds a set threshold value $P_{1t}$, $P_{2t}$ a clock will be started. When the pressure sensed by the sensors 3, 4 once again goes under the threshold value $P_{1t}$, $P_{2t}$, the clock will be stopped. The lengths of time $t_3$, $t_4$ measured by the clock(s) are used to determine the length n of the nip. The lengths of time $t_3$, $t_4$ the first sensor 3 and second sensor 4, respectively, are over the threshold value are stored. Furthermore, the length of time $t_1$ between when the first sensor 3 and the second sensor 4 starts its clock is measured, as well as the length of time $t_2$ between when respective clock is stopped. The distance L between the sensors 3, 4 is easy to measure and is, thus, known. As the time $t_1$, $t_2$ it takes for the tongue 2 to move said known distance L is measured the speed of the tongue 2 may be calculated. A mean speed v is calculated using the following equation:

$$v = (L/t_1 + L/t_2)/2 \quad (1)$$

The length n of the roller nip may then be calculated using the following equation:

$$n = v(t_3 + t_4)/2 \quad (2)$$

Thus, the length n of the nip is measured by clocking the time two pressure sensitive parts are within the nip, which pressure sensitive parts are spaced apart a known distance. The threshold values are used to define the start and the end of the nip and could be adjusted for different purposes.

In some instances a more simplified measurement for the length of the nip is used. One such instance is when the Roller Nip Gauge is used as an indicator of only the length of the nip. In this case the following equation is used:

$$n = L(T_3 - T_2 + T_1)/(T_3 + T_2 - T_1) \quad (3)$$

As used in the above equation $T_1$ stands for the time from the start to the end of when the first pressure sensitive element is influenced of the "pressure line", and, thus, is within the nip. $T_2$ stands for the time from when the first pressure sensitive element is beginning to be influenced by the "pressure line" to the time when the second pressure sensitive element starts to be influenced by the "pressure line". $T_3$ stands for the time from when the first pressure sensitive element starts to be influenced by the "pressure line" until the second pressure sensitive element no longer is influenced by the "pressure line". Thus, all the above times $T_1$, $T_2$ and $T_3$ start at the same time.

In addition to measure the length n of the nip the Roller Nip Gauge may also be used to measure the pressure exerted in the nip, by direct measurement from the pressure sensors 3, 4. Either a maximal pressure may be used or a mean value of the pressure, which mean value normally is for the "pressure line". As stated above it is also possible to use a separate pressure sensor 25. The pressure measured by each sensor 3, 4, 25 may be stored and used as a reference. The pressure and the elasticity of the units effect the printing quality. As the pressure will depend on the elasticity of the units, a pressure outside an expected value may indicate that one unit should be replaced or adjusted. Thus, the Roller Nip Gauge of the present invention may be used as an indicator for maintenance. If mechanical switches 27, 28 are used as the pressure sensitive elements a separate pressure sensor 25 is normally furnished to give a measurement of the contact pressure of the nip. Also the temperature of the nip may be measured as indicated above, using a temperature sensor 26.

Normally the above calculations will be done automatically by the electronics of the housing 1, and is presented as length of nip, temperature, maximal pressure or mean pressure, respectively on a display or the like. The values are normally also stored, which means that measured values taken in the same position at different times may be used for evaluation. The electronics will also have standard means to transfer the stored measurements to a remote computer (not shown). This transfer may either be done instantly and wireless or the roller nip gauge may be physically attached to the computer for the transfer. The transfer as such is nothing new and as a person skilled in the art knows how to perform this it will not be described further here.

With reference to Fig. 4 one measuring cycle may be described in the following way. To begin with the tongue 2 of the Roller Nip Gauge is made to travel into the nip. When the first sensor 3 detects a pressure exceeding the set threshold value $P_{1t}$ at least one clock is started. When the second sensor 4 detects a pressure exceeding the set threshold value $P_{2t}$, the length of time $t_1$ from when the clock is started of the first sensor 3 is registered. At the other end of the nip a clock is started when the first sensor 3, detects a pressure below the set threshold value $P_{1t}$, and the length of time $t_2$ until the second sensor 4 detects a pressure below the set threshold value $P_{2t}$ is registered. The above registered length of times $t_1$, $t_2$ are used to calculate the speed v of the tongue and, thus, the speed of the roller or rollers as indicated above. Furthermore, the length of time $t_3$ during which the first sensor 3 detects a pressure above the set threshold value $P_{1t}$ is registered. In the same way the length of time $t_4$ the second sensor 4 detects a pressure above the threshold value $P_{2t}$ is registered. The latter two registered lengths of time $t_3$, $t_4$ are used to determine the length n of the nip as indicated above. When the last sensor 4 has passed the nip the tongue 2 may be retracted and the length n, maximal pressures $P_{1max}$, $P_{2max}$ and mean pressure of the nip may be shown on the display 13 of the roller nip gauge. The values are also stored for possible later evaluation and/or transfer to a remote computer. When the tongue 3 has been retracted and the measured values stored a new cycle may be started.

The contact lengths or nip lengths n to be measured in an offset printing machine could vary between approx. 1 and 20 mm.

In measuring the nip between two rollers it is possible to measure at different position at the width of the rollers. It is also possible to have two or more Roller Nip Gauges to measure simultaneously at different widths of the rollers, which will give an indication of the alignment of the rollers.

Different measuring cycles may be programmed in the Roller Nip Gauge, e.g. having different threshold values for different measuring positions. In order to reduce the size of the Roller Nip Gauge it is possible to arrange a special unit (not shown), in which the programming and possibly the reading of the measured values are done. If such a unit is used the Roller Nip Gauge will be placed in said unit between measuring cycles.

As a further example of a conceivable Roller Nip Gauge reference is made to Fig. 6. The housing 14 of this Roller Nip Gauge is shown partly broken away.

The tongue 15, having two separated pressure sensors 3, 4 as stated above, may be feed out or retracted into the housing 14. A person skilled in the art, realises that also this tongue 15 may be furnished with further sensors for pressure and/or temperature and that the pressure sensors 3, 4 may be replaced by mechanical switches, as indicated above. To accommodate the tongue 15 a reel 16 is received inside the housing 14, whereby the tongue 15 may be wound upon the reel 16. The reel 16 may be spring biased to retract the tongue 15 and preferably have some kind of locking means (not shown), to lock the tongue 15 in a desired feed out position. The tongue 15 may be made of different materials, whereby the major part of the tongue 15 is made of a material enabling it to hold a straight outline and be inserted from a distance into a nip. However, the outermost part of the tongue 15 is formed by the same material as the tongue 2 of the above embodiment in order to be inserted in the nip. To control the position of the tongue 15 and to assist in the movement outwards or inwards for the tongue a pair of feeding or protecting rolls 17 may be arranged at a tongue inlet of the housing 14. Said rolls 17 are protecting in that they hinder the housing 14 of the Roller Nip Gauge to be feed into the nip. A pair of calibration rolls 18 is also arranged in the housing 14. The calibration rolls 18 are used to calibrate the Roller Nip Gauge when the tongue is moved at a known speed. In other embodiments the calibration rolls are placed outside the housing, possibly in a remote unit for programming, display and reading as indicated above. During the actual measurement the length of the tongue 15 is kept constant. The extendable tongue 15 is beneficial in positions having limited space and for the possibility to adjust the length of the tongue and enabling measurement from a distance.

In the shown embodiment there are two lights 19, 20 on the outside of the housing 14. There is also a buzzer 21 or other means for giving an acoustic signal. The housing 14 is also furnished with a display 22. The lights 19, 20 may be lights of different colour, e.g. a green light 19 and a red light 20. The lights may be used in the following way. When the roller nip gauge is ready for a measurement the green light 19 may be lit, the green light 19 may also be lit if a measurement is accepted and stored. It is also possible to have both the green and the red lights 19, 20 lit to indicate that the roller nip gauge is ready for measurement. If something goes wrong during one measurement the red light 20 may be lit indicating that no value was registered. A person skilled in the art realises that the lights may be used in any combination to indicate any condition of the Roller Nip Gauge.

As the Roller Nip Gauge often is used in confined spaces the red and green lights 19, 20, may be complemented by a buzzer 21, giving different acoustic signals to indicate approval or disapproval. The measured values are also shown on the display 22. The roller nip gauge may be connected to a remote computer (not shown) by means of a wire 23, or wireless by any suitable means.

A number of buttons are also placed on the outside of the housing 14 to start and to program a measuring cycle, to delete measured values, to store measured position together with measured value or the like. The measured position may be indicated by different Nos. for the units of the nip.

**Claims**

1. A Roller Nip Gauge comprising a housing (1, 14) and a tongue (2, 15) extending from one end of the housing (1, 14), **characterized in that** one pressure sensor (25) is arranged at the outer end of the tongue.

2. The Roller Nip Gauge of claim 1, **characterized in that** the total thickness of the tongue (2, 15) and the one pressure sensor (25) is in the order of 0.1 to 0.5 mm.

3. The Roller Nip Gauge of claim 1 or 2, **characterized in that** the extension length of the tongue (15) from the housing (14) may be varied.

4. The Roller Nip Gauge of claim 3, **characterized in that** the tongue (15) is wound on a reel (16) placed inside the housing (14).

5. The Roller Nip Gauge of any of the previous claims, **characterized in that** a calibration means comprising calibration rolls (18) is placed inside or outside the housing (14) and

6. The Roller Nip Gauge of any of the previous claims, **characterized in that** a display (13, 22), one or more lights (19, 20) and/or a buzzer (21) is arranged on the housing (1, 14).

7. The Roller Nip Gauge of any of the previous claims, **characterized in that** electronics for controlling the measurements and calculation of selected values are enclosed in the housing (1, 14).

8. The Roller Nip Gauge of any of the previous claims, **characterized in that** the housing may be connected to a remote computer for transfer of information from and/or to the electronics of the housing (1, 14).

9. The Roller Nip Gauge of any of the previous claims, **characterized in that** the Roller Nip Gauge may be placed in a unit for programming of a measuring cycle, for reading, displaying and/or calibration.

Fig. 2

Fig. 3

Fig. 1

Fig. 4

Fig. 5

Fig. 7

Fig. 6